# EUROPEAN PATENT APPLICATION

(11) **EP 4 443 340 A1**
(43) Date of publication of application: **09.10.2024**
(21) Application number: 23166563.9
(22) Date of filing: 04.04.2023
(51) Int. Cl.: G06N 5/022, G06N 20/00

(54) **GENERATION OF TRAINING DATA SET FOR AN ARTIFICIAL INTELLIGENCE MODEL FROM ENGINEERING PROGRAMS**

(71) Applicant: Siemens Aktiengesellschaft, 80333 München (DE)
(72) Inventor: ORUGANTI, Srivathsa Simha, 560100 Bangalore, Karnataka (IN)
(74) Representative: Isarpatent

(57) **Abstract**

The present invention provides a method and system for generating training data set for an artificial intelligence model. The method comprises receiving, by a processing unit, an engineering program from a user. The method further comprises generating a knowledge graph based on an analysis of the received engineering program. The method further comprises generating, by the processing unit, a pruned knowledge graph by pruning the determined one or more portions of the knowledge graph which lack dependencies with the determined set of portions of the knowledge graph. The method further comprises generating, by the processing unit, a transformed engineering program based on an analysis of the pruned knowledge graph wherein the transformed engineering program is integrated into a training data set of the artificial intelligence model.

## Description

The present invention relates to a field of engineering of computer assisted programming, and more particularly relates to a method and system for generating training data set to train an artificial intelligence model.

Artificial Intelligence (AI) models in Industrial automation domain are trained using training data sets comprising a large number of engineering projects with desirable characteristics. Quality and relevance of the training data set are critical for ensuring that the AI models learn desired characteristics and perform optimally. Thus identification and gathering of such training data sets is a critically important task. However, a process of collecting and pruning the training data set can be time-consuming and resource-intensive, especially in the industrial automation domain where data is often diverse and complex.

One of the main challenges in gathering training data for AI models is composition of existing engineering projects, which often have a diversified focus and cannot be directly used as training data. Additionally, existing systems are not equipped to determine the suitability of an engineering project for training data, which increases the manual effort required to identify and extract relevant data. Furthermore, existing tools for generating training data are often model-specific and require heavy modification to generate training data for new models.

The manual effort required to generate training data is also significant. This includes the time and resources invested in creating new engineering projects, judging the relevance of existing projects, and customizing existing projects to meet the requirements of training data. The process is also time-intensive and requires high manual effort, as engineers must manually sift through a large database of engineering projects to identify those that are relevant for training.

In light of above, there exists a need for an efficient method and system for generating training data sets for an artificial intelligence model from an engineering program.

The object of the invention is achieved by an efficient method for generating training data sets for an artificial intelligence model from an engineering program. The engineering program is configured to be executed in a programmable logic controller to implement a specific objective in a technical installation. Examples of the technical installation includes but is not limited to a power plant, a manufacturing plant, and a water treatment plant.

In the preferred embodiment, the method comprises receiving from a database, by the processing unit, a plurality of engineering programs. The plurality of engineering programs comprises sourcecode configured to control a plurality of engineering objects to implement a plurality of industrial processes in the technical installation. The plurality of engineering objects comprise devices and components configured to perform the plurality of industrial processes in the technical installation. Examples of the plurality of industrial processes includes, but is not limited to a heating process, a boiling process, a combustion process, or a lamination process. Examples of the plurality of engineering objects may include, for example, a programmable logic controller, one or more field devices, or any other automation devices.

In the preferred embodiment, the method further comprises analyzing, by the processing unit, the plurality of engineering programs by application of a natural language processing algorithm on the plurality of engineering programs. Examples of the natural language processing algorithm include but is not limited to a Stanford Parser algorithm, a Spacy algorithm, a CoreNLP algorithm, an OpenNLP algorithm, a Gensim algorithm, a Hugging Face Transformers algorithm, and a Stanford Part-of-Speech Tagger (POS) algorithm.

In the preferred embodiment, the method further comprises generating, by the processing unit, a plurality of tokens from the plurality of engineering programs based on the analysis. Each token of the plurality of tokens comprises a specific code snippet of the plurality of engineering programs. In one example, each token of the plurality of tokens comprises program elements such as identifiers, variable names, functions, class names, and operators. The plurality of tokens further comprises comments and white spaces.

The processing unit is further configured to perform syntatic analysis of the plurality of tokens to determine the comments and the white spaces within the plurality of tokens. The processing unit is further configured to remove the comments and the white spaces from the plurality of tokens.

In one example, the processing unit performs the syntactic analysis by use of a parser. Examples of the parser includes but is not limited to a Bison parser and a JavaCC parser. The parser is a software component which configured to receive the plurality of engineering programs as input and generate a abstract syntax tree from the plurality of engineering programs. The processing unit is further configured to analyze the generated abstract syntax tree to determine the comments and the white spaces in the plurality of tokens and in the plurality of engineering programs.

In the preferred embodiment, the method further comprises comparing, by the processing unit, each token of the plurality of tokens with each code snippet in the plurality of engineering programs. The method further comprises generating, by the processing unit, a first map between each of the plurality of tokens and a plurality of code snippets of the plurality of engineering programs based on the analysis. In one example, the generated first map is a mapping table which comprises a location of each token of the plurality of tokens, in the plurality of engineering programs.

In the preferred embodiment, the method further comprises analyzing, by the processing unit, the plurality of tokens by application of a plurality of code processing algorithms on the plurality of tokens. The plurality of code processing algorithms comprises at least a parsing algorithm, a lexical analysis algorithm, and a semantic analysis algorithm. The plurality of code processing algorithms are configured to analyze the plurality of engineering programs and determine a plurality of dependencies between the plurality of tokens. Teh plurality of code processing algorithms are stored in the database. The plurality of dependencies include one or more data flow relationships, one or more control flow relationships, one or more inheritance relationships, and one or more dependency relationships between a plurality of program elements in the plurality of tokens of the plurality of engineering programs.

Examples of the parsing algorithms include a Earley parser algorithm, a CYK parser algorithm, and a LALR parser algorithm. Examples of the lexical analysis algorithm includes, but is not limited to a Deterministic Finite Automaton algorithm, a non-Deterministic Finite Automaton algorithm, and a Regular Expression Matching algorithm. Examples of the Semantic Analysis Algorithms includes, but is not limited to Type Checking algorithm, a Control Flow Analysis algorithm, and an Interprocedural Analysis algorithm.

In the preferred embodiment, the method further comprises determining, by the processing unit, a plurality of dependencies between the plurality of tokens based on the analysis. The plurality of dependencies include one or more data flow relationships, one or more control flow relationships, one or more inheritance relationships, and one or more dependency relationships between a plurality of program elements in the plurality of tokens of the plurality of engineering programs.

In the preferred embodiment, the method further comprises generating, by the processing unit, a plurality of logic blocks based on an analysis of the plurality of dependencies between the plurality of tokens. Each logic block of the plurality of logic blocks comprises at least one or more tokens, of the plurality of tokens, which are interrelated to each other. For example, in a case where a first token comprises a definition of a function, and a second token comprises a call of the function, then the first token and second token has a dependency relation between each other. In such a case, the processing unit is configured to group the first token and the second token into a logic block.

In the preferred embodiment, the method further comprises analyzing, by the processing unit, the plurality of logic blocks by application of a pattern recognition algorithm on the plurality of logic blocks. Examples of the pattern recognition algorithm includes, but is not limited to a decision tree algorithm, a neural network based algorithm, a support vector machine based algorithm, a K-nearest neighbours algorithm. The pattern recognition algorithm is configured to identify one or more patterns in the plurality of logic blocks and then to classify the plurality of logic blocks into a plurality of clusters based on the determined one or more patterns. Examples of the determined one or more clusters include but is not limited to a syntax based pattern, a semantics based pattern, an inheritance based pattern and a dependency based pattern.

In the preferred embodiment, the method further comprises clustering, by the processing unit, the plurality of logic blocks into a plurality of clusters based on the analysis. In one example, the plurality of logic blocks are clustered by application of an non-supervised learning algorithm on the plurality of logic blocks. Examples of the non-supervised learning algorithm includes a KNN classification algorithm. In one example, two or more logic blocks of the plurality of logic blocks share at least one pattern of the one or more patterns. In such a case, the two or more logic blocks are clustered by the processing unit into a single cluster.

In the preferred embodiment, the method further comprises generating, by the processing unit, a plurality of templates for programming logic based on an analysis of one or more logic blocks in each cluster of the plurality of clusters. Each template of the plurality of templates is indicative of a specific type of programming logic. Examples of the plurality of templates includes but is not limited to a conditional loop template, a function template, a class template, an arithemetic logic template, and a conditional logic template.

In the preferred embodiment, the method further comprises generating, by the processing unit, a plurality of nodes and a plurality of edges based on an analysis of the plurality of templates. Each node of the plurality of nodes comprises information associated with a specific template of the plurality of templates. Each edge of the plurality of edges comprises information associated with one or more dependencies between a first template and a second template in the plurality of templates. In one example, the processing unit is configured to apply the parser algorithm on the plurality of templates and the plurality of engineering programs to determine dependencies between templates in the plurality of templates.

In the preferred embodiment, the method further comprises generating, by the processing unit, the template based knowledge graph based on the generated plurality of nodes and the generated plurality of edges. To generate the template based knowledge graph, the processing unit is configured to connect the plurality of nodes with the plurality of edges. The generated template based knowledge graph comprises information associated with the plurality of engineering programs, arranged as the plurality of templates. Advantageously, the template based knowledge graph comprises a plurality of segments where each segment comprises information about a specific type of template in the plurality of templates. Thus, the plurality of segments comprises segments indicative of conditional loop templates, function templates, class templates, arithmetic logic templates, and conditional logic templates in the plurality of engineering programs. Thus, information associated with the plurality of engineering programs is automatically converted into a form which can be used for training an artificial intelligence model. Thus, time, cost and labour involved in manually generating training data from the plurality of engineering programs is drastically reduced.

In the preferred embodiment, the method further comprises receiving, by a processing unit, an engineering program from a user. In one example, the processing unit is configured to receive the engineering program via a human machine interface such as a personal computer.

In the preferred embodiment, the method further comprises applying, by the processing unit, the natural language processing algorithm on the engineering program. Examples of the natural language processing algorithm include but is not limited to a Stanford Parser algorithm, a Spacy algorithm, a CoreNLP algorithm, an OpenNLP algorithm, a Gensim algorithm, a Hugging Face Transformers algorithm, and a Stanford Part-of-Speech Tagger (POS) algorithm.

In the preferred embodiment, the method further comprises generating, by the processing unit, a set of tokens from the engineering program based on the application of the natural language processing algorithm. Each token of the set of tokens comprises a specific code snippet of the engineering program. The specific code snippet comprises a plurality of program elements such as identifiers, variable names, functions, class names, and operators of the engineering program.

In the preferred embodiment, the method further comprises generating, by the processing unit, a second map between each of the set of tokens and a set of code snippets of the engineering program based on the analysis. In one example, the second map is generated based on the application of the natural language processing algorithm on the engineering program and further on the set of tokens. The second map is a mapping table that maps each token of the set of tokens to a specific portion of the engineering program.

In the preferred embodiment, the method further comprises analyzing, by the processing unit, the set of tokens by application of the plurality of code processing algorithms on the set of tokens. The plurality of code processing algorithms comprises at least the parsing algorithm, the lexical analysis algorithm, and the semantic analysis algorithm. The plurality of code processing algorithms are configured to configured to extract a plurality of dependencies between the set of tokens. The plurality of dependencies include one or more data flow relationships, one or more control flow relationships, one or more inheritance relationships, and one or more dependency relationships between the plurality of program elements in the set of tokens of the engineering program. Advantageously, a plurality of syntatic and semantic features of the engineering program are extracted automatically by the processing unit. Thus a manual labour and time required to extract the plurality of syntatic and semantic features is eradicated.

In the preferred embodiment, the method further comprises determining, by the processing unit, the plurality of dependencies between the set of tokens based on the analysis. The processing unit is further configured to determine one or more tokens from the set of tokens, such that the one or more tokens have one or more dependencies between each other.

In the preferred embodiment, the method further comprises generating, by the processing unit, a set of logic blocks based on an analysis of the plurality of dependencies between the set of tokens. Each logic block of the set of logic blocks comprises at least one or more tokens, of the set of tokens, which are interrelated to each other. Furthermore, each logic block of the set of logic blocks has one or more dependencies between the other logic blocks of the set of logic blocks. For example, one or more program elements of a first logic block of the set of logic blocks has one or more dependencies with one or more program elements of a second logic block of the set of logic blocks. In one example, a program element, such as an identifier, is defined in a first logic block, and the program element is referenced in a second code element. In such a case, the second logic block has an interelationship such as a dependency to the first logic block.

In the preferred embodiment, the method further comprises generating, by the processing unit, a set of nodes and a set of edges based on an analysis of the set of logic blocks. Each node of the set of nodes comprises information associated with a specific logic block of the set of logic blocks. Each edge of the set of edges comprises information associated with one or more dependencies between a first logic block and a second logic block in the set of logic block.

In the preferred embodiment, the method further comprises generating, by the processing unit, the knowledge graph based on the generated set of nodes and the generated set of edges. To generate the knowledge graph, the processing unit is configured to connect the set of nodes with each other using one or more edges of the set of edges.

In the preferred embodiment, the method further comprises generating, by the processing unit, a third map between each node of the set of nodes of the knowledge graph and the set of logic blocks of the engineering program based on an analysis of the knowledge graph and the set of logic blocks. In one example, the generated third map is a mapping table which comprises a mapping between each node of the set of nodes and a location of a logic block which the node indicates in the engineering program. In other words, the method further comprises generating, by the processing unit, a knowledge graph based on an analysis of the received engineering program.

In the preferred embodiment, the method further comprises comparing, by the processing unit, one or more nodes of the knowledge graph with one or more nodes of the template based knowledge graph. The one or more nodes of the knowledge graph are compared to the one or more nodes of the template based knowledge graph based on at least one of a content, a structure and one or more dependencies of the one or more nodes of the knowledge graph.

In the preferred embodiment, the method further comprises determining, by the processing unit, the one or more nodes of the knowledge graph which is similar to the one or more nodes of the template based knowledge graphs based on the comparison. In one example, the processing unit is configured to determine the one or more nodes of the knowledge graph based on application of a kernel based classifer algorithm such as a edge walk kernel based algorithm.

In the preferred embodiment, the method further comprises comparing, by the processing unit, a first subgraph of the knowledge graph with a second subgraph of the template based knowledge graph. In one example, the first subgraph of the knowledge graph is compared with the second subgraph of the template knowledge graph algorithm by application of a similarity checking algorithm on the first and second second subgraph. Examples of the similarity checking algorithm comprsies, but is not limited to a Jaccard Similarity Algorithm, a cosine similarity algorithm, a subgraph matching algorithm, and a graph kernel algorithm.

In the preferred embodiment, the method further comprises determining, by the processing unit, one or more subgraphs of the knowledge graph which is similar to one or more subgraphs of the template based knowledge graphs based on the comparison. In one example, the similarity checking algorithm generates a similarity score for the first subgraph and the second subgraph. The one or more subgraphs of the knowledge graph is determined based on the determined similarity score.

In the preferred embodiment, the method further comprises determining, by the processing unit, a set of portions of the knowledge graph based on the determined one or more nodes and the determined one or more subgraphs of the knowledge graph. The set of portions of the knowledge graph are similar to one or more templates of the plurality of templates in the template based knowledge graph. Thus, in other words, the method further comprises determining the set of portions of the knowledge graph which are similar to the one or more templates of the plurality of templates. Furthermore, it is noted that the set of portions are determined based on a comparison of the knowledge graphs with the template based knowledge graph.

The processing unit is configured to mark the determined set of portions of the knowledge graph as relevant portions of the knowledge graph. The processing unit is further configured to map the relevant portions of the knowledge graphs to one or more portions of the engineering program. In other words, the method further comprises comparing, by the processing unit, the generated knowledge graph with a template based knowledge graph comprising the plurality of templates. It is noted that the plurality of templates are extracted from a plurality of engineering programs. Thus, advantageously, the set of portion of the knowledge graph which resemble the plurality of templates extracted from the plurality of engineering programs, are automatically identified from the knowledge graph.

Furthermore, the set of portions are identified without a necessity of executing resource intensive methods such as clustering algorithms such as KNN classification algorithm on the set of tokens of the engineering program. Instead, the set of portions of the knowledge graphs are determined by use of methods which have lesser amount of memory and processing power requirements, such as knowledge graph comparison operations. It is noted that the plurality of templates comprise data sets which are relevant for training the artificial intelligence models. Since the determined set of portions are similar to the plurality of templates, the determined set of portions of the knowledge graph are indicative of those portions, of the engineering program, which are relevant to train the artificial intelligence model. Advantageously, the portions of the engineering program which are relevant for training of the artificial intelligence model is determined by the processing unit automatically, without a necessity of manual labour.

In the preferred embodiment, the method further comprises analyzing, by the processing unit, the knowledge graph to determine one or more dependencies between the relevant portions of the knowledge graph and each node of the knowledge graph. The method further comprises determining, by the processing unit, a first node of the knowledge graph which lacks immediate dependencies with a plurality of nodes of the relevant portions of the knowledge graph based on the analysis.

In the preferred embodiment, the method further comprises determining, by the processing unit, a second node which is an orphan node in the knowledge graph. An orphan node in a knowledge graph is a node which lacks dependencies with other nodes of the knowledge graph. The method further comprises removing, by the processing unit, the determined first node and the determined second node from the knowledge graph to generate the pruned knowledge graph. In other words, one or more portions, of the knowledge graph, which lack immediate dependencies with the relevant portions of the knowledge graph are pruned by the processing unit. It is noted that the determined set of portions of the knowledge graph are indicative of the portions of the engineering program which are relevant for training the artificial intelligence model. Thus the one or more portions of the knowledge graphs which lack dependencies with the determined set of portions of the knowledge graph, indicate those portions of the engineering program, which are irrelevant for training the artificial intelligence models. Advantageously, the knowledge graph is pruned of the one or more portions of the knowledge graph, which are indicative of those portions of the engineering program, which are irrelevant for training the artificial intelligence models.

In the preferred embodiment, the method further comprises analysing, by the processing unit, the generated second map and the generated third map. The processing unit is further configured to map each node of the pruned knowledge graph with one or more logic blocks of the engineering program based on the analysis. The method further comprises determining, by the processing unit, two or more logic blocks associated with at least one node of the pruned knowledge graph based on the analysis. The method further comprises concatenating, by the processing unit, the determined two or more logic blocks to generate the transformed engineering project. In other words, the method further comprises generating, by the processing unit, a transformed engineering program based on an analysis of the pruned knowledge graph. The transformed engineering program is a new training dataset for the artificial intelligence model. Advantageously, the transformed engineering program is devoid of portions of the engineering program, which are irrelevant for training the artificial intelligence models. Thus, the transformed engineering program is indicative of a refined training data set for training the artificial intelligence model. Furthermore, manual labour and time required to refine training data set from the engineering program is eradicated.

In the preferred embodiment, the method further comprises receiving, by the processing unit, a plurality of template labels for each template of the plurality of templates of the template based knowledge graph. In one example, the plurality of template labels are received from a user via a human machine interface. The plurality of template labels comprises a name for each template of the plurality of templates in the template based knowledge graph. The name of each template indicates at least one of a function of the template, an industrial domain associated with the template, and a programming language associated with the template.

In the preferred embodiment, the method further comprises receiving, by the processing unit, information associated with a plurality of training requirements for the artificial intelligence model. In one example, information associated with the plurality of training requirements is received from the user via the human machine interface. The plurality of training requirements is a textual description of desired key performance indicators of the artificial intelligence model which is to be trained. In one example, the plurality of training requirements comprises a list of template labels.

In the preferred embodiment, the method further comprises analyzing, by the processing unit, the plurality of training requirements and the plurality of template labels by application of the natural language processing algorithm on the plurality of training requirements and the plurality of template labels. The processing unit is further configured to compare the the plurality of training requirements and the plurality of template labels based on the analysis

In the preferred embodiment, the method further comprises determining, by the processing unit, one or more templates labels of the plurality of template labels, which match with one or more of the plurality of training requirements based on the comparison. The processing unit is further configured to map the determined one or more template labels with one or more templates of the plurality of templates of the template based knowledge graph. The method further comprises determining, by the processing unit, the one or more templates of the plurality of templates which are mapped with the determined one or more template labels.

In the preferred embodiment, the method further comprises determining, by the processing unit, one or more nodes of the template based knowledge graph which are indicative of the determined one or more templates. The method further comprises determining, by the processing unit, one or more nodes of the pruned knowledge graph based on an analysis of the one or more nodes of the template based knowledge graph and the pruned knowledge graph. The determined one or more nodes of the pruned knowledge graph are similar to the one or more nodes of the template based knowledge graph. In one example, the one or more nodes of the pruned knowledge graph are determined by application of a similarity checking algorithm on the pruned knowledge graph and the one or more nodes of the template based knowledge graph.

In the preferred embodiment, the method further comprises determining, by the processing unit, dependencies of the determined one or more nodes of the pruned knowledge graph with other nodes of the pruned knowledge graph based on an analysis of the pruned knowledge graph. The method further comprises transforming, by the processing unit, the pruned knowledge graph by removing other nodes of the pruned knowledge graph which lack immediate dependencies with the determined one or more nodes of the pruned knowledge graph. The processing unit is further configured to determine one or more logic blocks from the engineering project, which match with a plurality of nodes of the transformed knowledge graph.

The one or more logic blocks are determined based on an analysis of the first map, the second map and the third map.

The processing unit is further configured to generate the transformed engineering program based on the determined one or more logic blocks. Advantageously, the transformed engineering program only contains the one or more logic blocks which are determined based on the received plurality of training requirements. Thus, the transformed engineering project lacks logic blocks which are indicative of undesirable characteristics. Advantageously, a training data set with desired characteristics is automatically extracted from the received engineering program. In other words, the method further comprises generating, by the processing unit, a training data set to train the artificial intelligence model based on the transformed knowledge graph and the received plurality of training data requirements.

The object of the present invention is also achieved by an engineering system for generating training data set for an artificial intelligence model. The engineering system comprises a processing unit and a memory coupled to the processor. The memory comprises an remodeller module stored in the form of machine-readable instructions executable by the processor. The remodeller module is configured for performing the method as described above.

The object of the present invention is also achieved by an industrial environment. The industrial environment comprising an engineering system, a technical installation comprising one or more physical components and one or more client devices communicatively coupled to the engineering system and the technical installation. The engineering system is configured to perform the above described method steps.

The object of the present invention is also achieved by a computer-program product having machine-readable instructions stored therein, that when executed by one or more processor(s), cause the one or more processor(s) to perform method steps as described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG 1: is a block diagram of an industrial environment capable of automatic generation of training data set for training an artificial intelligence model, according to an embodiment of the present invention;
- FIG 2: is a block diagram of an engineering system, such as those shown in FIG. 1, in which an embodiment of the present invention can be implemented;
- FIG 3: is a block diagram of an remodeller module, such as those shown in FIG 2, in which an embodiment of the present invention can be implemented;
- FIG 4A-H: is a process flowchart illustrating an exemplary method of automatically generating training data set for training an artificial intelligence model, according to an embodiment of the present invention;
- FIG 5: is a schematic representation of an exemplary process of generating a knowledge graph from an engineering program, according to an embodiment of the present invention;
- FIG 6: is a schematic representation of a system of automatic generation of training data set for training an artificial intelligence model, according to an embodiment of the present invention;
- FIG 7: is a schematic representation of a system for training an artificial intelligence model, according to an embodiment of the present invention;
- FIG 8: is a schematic representation of determination of a relevant portion of a knowledge graph of an engineering program, according to an embodiment of the present invention;
- FIG 9: is a schematic representation of pruning of a knowledge graph associated with a knowledge graph, according to an embodiment of the present invention; and
- FIG 10: is a schematic representation of generating a transformed engineering project, according to an embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

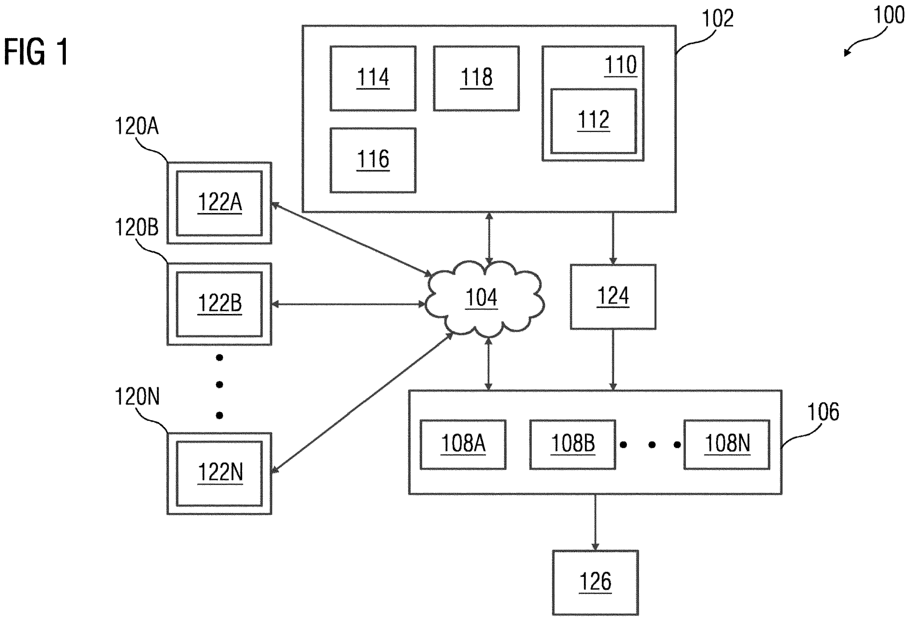

FIG 1 is a block diagram of an industrial environment 100 capable of automatic generation of training data set 106 for training an artificial intelligence model 126, according to an embodiment of the present invention. In FIG 1, the industrial environment 100 includes an engineering system 102, and one or more client devices 120A-N. As used herein, "industrial environment" refers to a processing environment comprising configurable computing physical and logical resources, for example, networks, servers, storage, applications, services, etc., and data distributed over a platform, such as cloud computing platform. The industrial environment 100 provides on-demand network access to a shared pool of the configurable computing physical and logical resources. The engineering system 102 is communicatively connected to a technical installation via the network 104 (such as Local Area Network (LAN), Wide Area Network (WAN), Wi-Fi, Internet, any short range or wide range communication). Examples of the technical installation includes, a power plant, a manufacturing plant, and a water treatment plant. The engineering system 102 is also connected to the one or more client devices 120A-N via the network 104.

The artificial intelligence model 126 is trained using a training data set 106 using at least one of a supervised learning method or an unsupervised learning method. The training data set 106 comprises information associated with a plurality of engineering programs 108A-N. The plurality of engineering programs 108A-N comprises sourcecode, program elements such as identifiers, functions, classes, conditional statements, and loop statements. In one example, the plurality of engineering programs are stored in a database 118. Each of the plurality of engineering programs 108A-N comprises sourcecode which may be compiled and executed by a programmable logic controller to control a plurality of industrial devices in the technical installation. The plurality of engineering programs 108A-N comprises engineering programs associated with a plurality of domains. Examples of the plurality of domains includes, but is not limited to a chemical domain, a mechanical domain, a manufacturing domain, and an energy domain.

The one or more client devices 120A-N may be a desktop computer, laptop computer, tablet, smart phone and the like. Each of the one or more client devices 120A-N is provided with a user interface 122A-N for receiving the plurality of engineering programs 108A-N and the engineering program 124 from a user. For example, the one or more client devices 120A-N can access the engineering system 102 for inputting the plurality of engineering programs 108A-N to the database 118. The one or more client devices 120A-N can access cloud applications (such as displaying source code of the plurality of engineering programs 108A-N via a web browser). Throughout the specification, the terms "client device" and "user device" are used interchangeably.

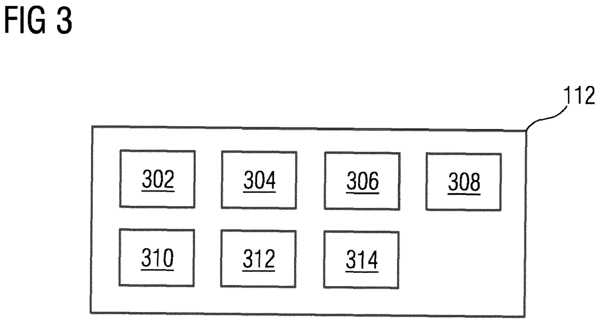

The engineering system 102 may be a standalone server deployed at a control station or may be a remote server on a cloud computing platform. In a preferred embodiment, the engineering system 102 may be a cloud-based engineering system. The engineering system 102 may comprise a platform 110 (such as a cloud computing platform), an remodeller module 112, a server 114 including hardware resources and an operating system (OS), a network interface 116 and the database 118. The network interface 116 enables communication between the engineering system 102, the technical installation, and the one or more client device(s) 120A-N. The interface (such as cloud interface)(not shown in FIG 1) may allow the engineers at the one or more client device(s) 120A-N to access the plurality of engineering programs 108A-N stored at the engineering system 102 and perform one or more actions on the engineering project files as same instance. The server 114 may include one or more servers on which the OS is installed. The servers 114 may comprise one or more processors, one or more storage devices, such as, memory units, for storing data and machine-readable instructions for example, applications and application programming interfaces (APIs), and other peripherals required for providing computing (such as cloud computing) functionality. The platform 110 enables functionalities such as data reception, data processing, data rendering, data communication, etc. using the hardware resources and the OS of the servers 114 and delivers the aforementioned services using the application programming interfaces deployed therein. The platform 110 may comprise a combination of dedicated hardware and software built on top of the hardware and the OS. The platform 110 may further comprise an remodeller module 112 configured for generating engineering programs. The remodeller module 112 further comprises a knowledge repository 126 comprising at least one name graph. Details of the remodeller module 112 is explained in FIG. 3. FIG. 1 further depicts an engineering program 124 received from the one or more client devices 120A-N to the engineering system 102.

In one example, the plurality of engineering programs comprises a plurality of program structures such as classes, functions, identifiers, variables, and loop logic. In one example, the plurality of engineering programs comprises a plurality of classes. Each class of the plurality of classes comprises programming logic associated with the plurality of program structures.

The database 118 stores the information relating to the technical installation and the one or more client device(s) 120AN. The database 118 is, for example, a structured query language (SQL) data store or a not only SQL (NoSQL) data store. In an exemplary embodiment, the database 118 may be configured as cloud-based database implemented in the industrial environment 100, where computing resources are delivered as a service over the platform 110. The database 118, according to another embodiment of the present invention, is a location on a file system directly accessible by the remodeller module 112. The database 118 is configured to store engineering project files, engineering programs, object behavior model, parameter values associated with the the plurality of engineering programs 108A-N, test results, simulation results, status messages, one or more simulation instances, graphical programs, program logics, program logic patterns, and engineering object properties, one or more engineering object blocks, relationship information between the engineering objects, requirements, program update messages and the like.

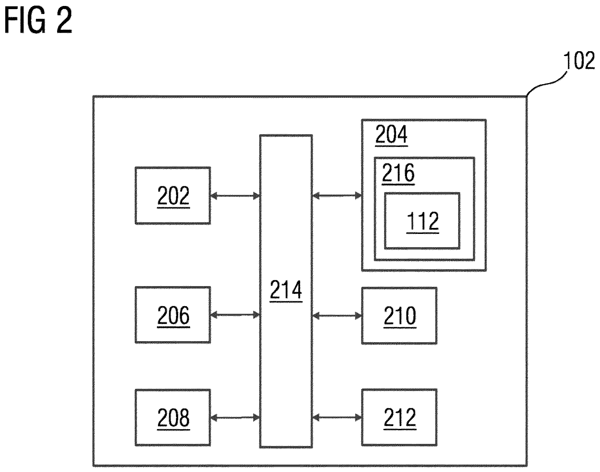

FIG 2 is a block diagram of an engineering system 102, such as those shown in FIG 1, in which an embodiment of the present invention can be implemented. In FIG 2, the engineering system 102 includes a processing unit 202, an accessible memory 204, a storage unit 206, a communication interface 208, an input-output unit 210, a network interface 212 and a bus 214.

The processing unit 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processing unit 202 may also include embedded controllers, such as generic or programmable logic devices or arrays, application specific integrated circuits, single-chip computers, and the like.

The memory 204 may be non-transitory volatile memory and nonvolatile memory. The memory 204 may be coupled for communication with the processing unit 202, such as being a computer-readable storage medium. The processing unit 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 includes an integrated development environment (IDE) 216. The IDE 216 includes the remodeller module 112 stored in the form of machine-readable instructions on any of the above-mentioned storage media and may be in communication with and executed by the processor(s) 202.

When executed by the processing unit 202, the remodeller module 112 causes the processing unit 202 to receive from the database 118, by the processing unit 202, the plurality of engineering programs 108A-N. The plurality of engineering programs 108A-N comprises sourcecode configured to control a plurality of engineering objects to implement a plurality of industrial processes in the technical installation. Examples of the plurality of engineering objects may include, for example, a programmable logic controller, one or more field devices, or any other automation devices. Examples of the plurality of industrial processes includes, but is not limited to a heating process, a boiling process, a combustion process, or a lamination process.

The remodeller module 112 further causes the processing unit 202 to analyze the plurality of engineering programs 108A-N by application of a natural language processing algorithm on the plurality of engineering programs 108A-N. Examples of the natural language processing algorithm include but is not limited to a Stanford Parser algorithm, a Spacy algorithm, a CoreNLP algorithm, an OpenNLP algorithm, a Gensim algorithm, a Hugging Face Transformers algorithm, and a Stanford Part-of-Speech Tagger (POS) algorithm.

The remodeller module 112 further causes the processing unit 202 to generate a plurality of tokens from the plurality of engineering programs 108A-N based on the analysis. Each token of the plurality of tokens comprises a specific code snippet of the plurality of engineering programs 108A-N. In one example, each token of the plurality of tokens comprises at least one of a word, number or special charactor. In another example, each token of the plurality of tokens comprises program elements such as identifiers, variable names, functions, class names, and operators. The plurality of tokens further comprises a plurality of comments and white spaces.

The processing unit 202 is further configured to perform syntatic analysis of the plurality of tokens to determine the plurality of comments and the white spaces within the plurality of tokens. The processing unit 202 is further configured to remove the plurality of comments and the white spaces from the plurality of tokens.

In one example, the processing unit 202 performs the syntactic analysis by use of a parser. Examples of the parser includes but is not limited to a Bison parser and a JavaCC parser. The parser is a software component which configured to receive the plurality of engineering programs 108A-N as input and generate a abstract syntax tree from the plurality of engineering programs 108A-N. The processing unit 202 is further configured to analyze the generated abstract syntax tree to determine the comments and the white spaces in the plurality of tokens and in the plurality of engineering programs 108AN.

The remodeller module 112 further causes the processing unit 202 to compare each token of the plurality of tokens with each code snippet in the plurality of engineering programs 108A-N. The remodeller module 112 further causes the processing unit 202 to generate a first map between each of the plurality of tokens and a plurality of code snippets of the plurality of engineering programs 108A-N based on the analysis. In one example, the generated first map is a mapping table which comprises a location of each token of the plurality of tokens, in the plurality of engineering programs 108A-N.

In the preferred embodiment, the method further comprises analyzing, by the processing unit 202, the plurality of tokens by application of a plurality of code processing algorithms on the plurality of tokens. The plurality of code processing algorithms comprises at least a parsing algorithm, a lexical analysis algorithm, and a semantic analysis algorithm. The plurality of code processing algorithms are configured to analyze the plurality of engineering programs 108A-N and determine a plurality of dependencies between the plurality of tokens. The plurality of code processing algorithms are stored in the database 118. The plurality of dependencies include one or more data flow relationships, one or more control flow relationships, one or more inheritance relationships, and one or more dependency relationships between a plurality of program elements in the plurality of tokens of the plurality of engineering programs 108A-N.

Examples of the parsing algorithms include a Earley parser algorithm, a CYK parser algorithm, and a LALR parser algorithm. Examples of the lexical analysis algorithm includes, but is not limited to a Deterministic Finite Automaton algorithm, a non-Deterministic Finite Automaton algorithm, and a Regular Expression Matching algorithm. Examples of the Semantic Analysis Algorithms includes, but is not limited to Type Checking algorithm, a Control Flow Analysis algorithm, and an Interprocedural Analysis algorithm.

The remodeller module 112 further causes the processing unit 202 to determine a plurality of dependencies between the plurality of tokens based on the analysis. The plurality of dependencies include one or more data flow relationships, one or more control flow relationships, one or more inheritance relationships, and one or more dependency relationships between a plurality of program elements in the plurality of tokens of the plurality of engineering programs 108A-N.

The remodeller module 112 further causes the processing unit 202 to generate a plurality of logic blocks based on an analysis of the plurality of dependencies between the plurality of tokens. Each logic block of the plurality of logic blocks comprises at least one or more tokens, of the plurality of tokens, which are interrelated to each other. For example, in a case where a first token comprises a definition of a function, and a second token comprises a call of the function, then the first token and second token has a dependency relation between each other. In such a case, the processing unit is configured to group the first token and the second token into a logic block.

The remodeller module 112 further causes the processing unit 202 to analyze the plurality of logic blocks by application of a pattern recognition algorithm on the plurality of logic blocks. Examples of the pattern recognition algorithm includes, but is not limited to a decision tree algorithm, a neural network based algorithm, a support vector machine based algorithm, a K-nearest neighbours algorithm. The pattern matching algorithm is configured to identify one or more patterns in the plurality of logic blocks and then to classify the plurality of logic blocks into a plurality of clusters based on the determined one or more patterns. Examples of the determined one or more clusters include but is not limited to a syntax based pattern, a semantics based pattern, an inheritance based pattern and a dependency based pattern.

The remodeller module 112 further causes the processing unit 202 to cluster the plurality of logic blocks into a plurality of clusters based on the analysis. In one example, the plurality of logic blocks are clustered by application of an unsupervised learning algorithm on the plurality of logic blocks. Examples of the unsupervised learning algorithm includes a KNN classification algorithm. In one example, two or more logic blocks of the plurality of logic blocks share at least one pattern of the one or more patterns. In such a case, the two or more logic blocks are clustered by the processing unit 202 into a single cluster.

The remodeller module 112 further causes the processing unit 202 to generate a plurality of templates for programming logic based on an analysis of one or more logic blocks in each cluster of the plurality of clusters. Each template of the plurality of templates is indicative of a specific type of programming logic. Examples of the plurality of templates includes but is not limited to a conditional loop template, a function template, a class template, an arithemetic logic template, and a conditional logic template.

The remodeller module 112 further causes the processing unit 202 to generate a plurality of nodes and a plurality of edges based on an analysis of the plurality of templates. Each node of the plurality of nodes comprises information associated with a specific template of the plurality of templates. Each edge of the plurality of edges comprises information associated with one or more dependencies between a first template and a second template in the plurality of templates. In one example, the processing unit 202 is configured to apply the parser algorithm on the plurality of templates and the plurality of engineering programs 108A-N to determine dependencies between templates in the plurality of templates.

The remodeller module 112 further causes the processing unit 202 to generate the template based knowledge graph based on the generated plurality of nodes and the generated plurality of edges. To generate the template based knowledge graph, the processing unit 202 is configured to connect the plurality of nodes with the plurality of edges. The generated template based knowledge graph comprises information associated with the plurality of engineering programs, arranged as the plurality of templates. Advantageously, the template based knowledge graph comprises a plurality of segments where each segment comprises information about a specific type of template in the plurality of templates. Thus, the plurality of segments comprises segments indicative of conditional loop templates, function templates, class templates, arithmetic logic templates, and conditional logic templates in the plurality of engineering programs 108A-N. Thus, information associated with the plurality of engineering programs 108A-N is automatically converted into a form which can be used for training the artificial intelligence model 126. Thus, time, cost and labour involved in manually generating training data from the plurality of engineering programs 108A-N is drastically reduced.

The remodeller module 112 further causes the processing unit 202 to receive the engineering program 124 from a user. In one example, the processing unit 202 is configured to receive the engineering program 124 via a human machine interface such as a personal computer.

The remodeller module 112 further causes the processing unit 202 to apply the natural language processing algorithm on the engineering program. Examples of the natural language processing algorithm include but is not limited to a Stanford Parser algorithm, a Spacy algorithm, a CoreNLP algorithm, an OpenNLP algorithm, a Gensim algorithm, a Hugging Face Transformers algorithm, and a Stanford Part-of-Speech Tagger (POS) algorithm.

The remodeller module 112 further causes the processing unit 202 to generate a set of tokens from the engineering program based on the application of the natural language processing algorithm. Each token of the set of tokens comprises a specific code snippet of the engineering program. The specific code snippet comprises a plurality of program elements such as identifiers, variable names, functions, class names, and operators of the engineering program.

The remodeller module 112 further causes the processing unit 202 to generate a second map between each of the set of tokens and a set of code snippets of the engineering program based on the analysis. In one example, the second map is generated based on the application of the natural language processing algorithm on the engineering program and further on the set of tokens. The second map is a mapping table that maps each token of the set of tokens to a specific portion of the engineering program.

The remodeller module 112 further causes the processing unit 202 to analyze the set of tokens by application of the plurality of code processing algorithms on the set of tokens. The plurality of code processing algorithms comprises at least the parsing algorithm, the lexical analysis algorithm, and the semantic analysis algorithm. The plurality of code processing algorithms are configured to configured to extract a plurality of dependencies between the set of tokens. The plurality of dependencies include one or more data flow relationships, one or more control flow relationships, one or more inheritance relationships, and one or more dependency relationships between the plurality of program elements in the set of tokens of the engineering program. Advantageously, a plurality of syntatic and semantic features of the engineering program are extracted automatically by the processing unit. Thus a manual labour and time required to extract the plurality of syntatic and semantic features is eradicated.

The remodeller module 112 further causes the processing unit 202 to determine the plurality of dependencies between the set of tokens based on the analysis. The processing unit 202 is further configured to determine one or more tokens from the set of tokens, such that the one or more tokens have one or more dependencies between each other.

The remodeller module 112 further causes the processing unit 202 to generate a set of logic blocks based on an analysis of the plurality of dependencies between the set of tokens. Each logic block of the set of logic blocks comprises at least one or more tokens, of the set of tokens, which are interrelated to each other. Furthermore, each logic block of the set of logic blocks has one or more dependencies between the other logic blocks of the set of logic blocks. For example, one or more program elements of a first logic block of the set of logic blocks has one or more dependencies with one or more program elements of a second logic block of the set of logic blocks. In one example, a program element, such as an identifier, is defined in a first logic block, and the program element is referenced in a second code element. In such a case, the second logic block has an interelationship such as a dependency to the first logic block.

The remodeller module 112 further causes the processing unit 202 to generate a set of nodes and a set of edges based on an analysis of the set of logic blocks. Each node of the set of nodes comprises information associated with a specific logic block of the set of logic blocks. Each edge of the set of edges comprises information associated with one or more dependencies between a first logic block and a second logic block in the set of logic block.

The remodeller module 112 further causes the processing unit 202 to generate the knowledge graph based on the generated set of nodes and the generated set of edges. To generate the knowledge graph, the processing unit 202 is configured to connect the set of nodes with each other using one or more edges of the set of edges.

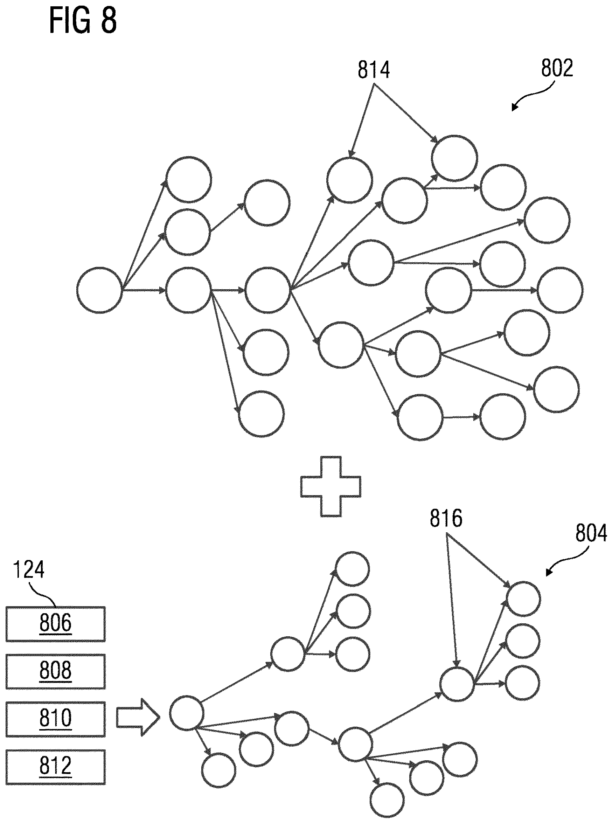

Referring to FIG. 8, a template based knowledge graph 802 and a knowledge graph 804 of the engineering program 124 is shown. The engineering program 124 has a plurality of logic blocks 806, 808, 810, and 812, which are used to generate the knowledge graph 804. A plurality of nodes 814 of the template based knowledge graph are indicative of the plurality of templates. A plurality of nodes 816 of the knowledge graph 804 are indicative of the plurality of logic blocks 806, 808, 810, and 812.

Referring back to FIG. 2, the remodeller module 112 further causes the processing unit 202 to generate a third map between each node of the set of nodes of the knowledge graph and the set of logic blocks of the engineering program 124 based on an analysis of the knowledge graph and the set of logic blocks. In one example, the generated third map is a mapping table which comprises a mapping between each node of the set of nodes and a location of a logic block which the node indicates in the engineering program 124. In other words, the remodeller module 112 further causes the processing unit 202 to generate a knowledge graph based on an analysis of the received engineering program 124.

The remodeller module 112 further causes the processing unit 202 to compare one or more nodes of the knowledge graph with one or more nodes of the template based knowledge graph. The one or more nodes of the knowledge graph are compared to the one or more nodes of the template based knowledge graph based on at least one of a content, a structure and one or more dependencies of the one or more nodes of the knowledge graph.

The remodeller module 112 further causes the processing unit 202 to determine the one or more nodes of the knowledge graph which is similar to the one or more nodes of the template based knowledge graphs based on the comparison. In one example, the processing unit is configured to determine the one or more nodes of the knowledge graph based on application of a kernel based classifer algorithm such as a edge walk kernel based algorithm.

The remodeller module 112 further causes the processing unit 202 to compare a first subgraph of the knowledge graph with a second subgraph of the template based knowledge graph. In one example, the first subgraph of the knowledge graph is compared with the second subgraph of the template knowledge graph algorithm by application of a similarity checking algorithm on the first and second second subgraph. Examples of the similarity checking algorithm comprsies, but is not limited to a Jaccard Similarity Algorithm, a cosine similarity algorithm, a subgraph matching algorithm, and a graph kernel algorithm.

The remodeller module 112 further causes the processing unit 202 to determine one or more subgraphs of the knowledge graph which is similar to one or more subgraphs of the template based knowledge graphs based on the comparison. In one example, the similarity checking algorithm generates a similarity score for the first subgraph and the second subgraph. The one or more subgraphs of the knowledge graph is determined based on the determined similarity score.

The remodeller module 112 further causes the processing unit 202 to determine a set of portions of the knowledge graph based on the determined one or more nodes and the determined one or more subgraphs of the knowledge graph. The set of portions of the knowledge graph are similar to one or more templates of the plurality of templates in the template based knowledge graph. The remodeller module 112 further causes the processing unit 202 to determine the set of portions of the knowledge graph which are similar to the one or more templates of the plurality of templates. Furthermore, it is noted that the set of portions are determined based on a comparison of the knowledge graphs with the template based knowledge graph.

The processing unit 202 is configured to mark the determined set of portions of the knowledge graph as relevant portions of the knowledge graph. The processing unit 202 is further configured to map the relevant portions of the knowledge graphs to one or more portions of the engineering program. The remodeller module 112 further causes the processing unit 202 to compare by the processing unit 202, the generated knowledge graph with a template based knowledge graph comprising the plurality of templates. It is noted that the plurality of templates are extracted from the plurality of engineering programs 108A-N. Thus, advantageously, the set of portion of the knowledge graph which resemble the plurality of templates extracted from the plurality of engineering programs 108A-N, are automatically identified from the knowledge graph.

Furthermore, the set of portions are identified without a necessity of executing resource intensive methods such as clustering algorithms such as KNN classification algorithm on the set of tokens of the engineering program 124. Instead, the set of portions of the knowledge graphs are determined by use of methods which have lesser amount of memory and processing power requirements, such as knowledge graph comparison operations. It is noted that the plurality of templates comprise data sets which are relevant for training the artificial intelligence model 126. Since the determined set of portions are similar to the plurality of templates, the determined set of portions of the knowledge graph are indicative of those portions, of the engineering program 124, which are relevant to train the artificial intelligence model 126. Advantageously, the portions of the engineering program 124 which are relevant for training of the artificial intelligence model 126 is determined by the processing unit 202 automatically, without a necessity of manual labour.

The remodeller module 112 further causes the processing unit 202 to analyze the knowledge graph to determine one or more dependencies between the relevant portions of the knowledge graph and each node of the knowledge graph. The remodeller module 112 further causes the processing unit 202 to generate a first node of the knowledge graph which lacks immediate dependencies with a plurality of nodes of the relevant portions of the knowledge graph based on the analysis.

The remodeller module 112 further causes the processing unit 202 to determine a second node which is an orphan node in the knowledge graph. An orphan node in a knowledge graph is a node which lacks dependencies with other nodes of the knowledge graph. The remodeller module 112 further causes the processing unit 202 to remove the determined first node and the determined second node from the knowledge graph to generate the pruned knowledge graph. In other words, one or more portions, of the knowledge graph, which lack immediate dependencies with the relevant portions of the knowledge graph are pruned by the processing unit 202. It is noted that the determined set of portions of the knowledge graph are indicative of the portions of the engineering program 124 which are relevant for training the artificial intelligence model 126. Thus the one or more portions of the knowledge graphs which lack dependencies with the determined set of portions of the knowledge graph, indicate those portions of the engineering program 124, which are irrelevant for training the artificial intelligence model 126. Advantageously, the knowledge graph is pruned of the one or more portions of the knowledge graph, which are indicative of those portions of the engineering program 124, which are irrelevant for training the artificial intelligence models.

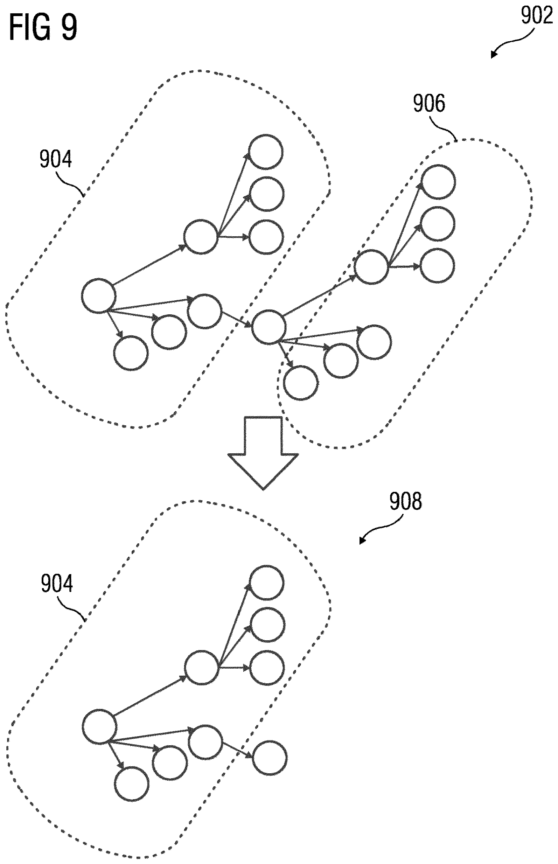

Referring to FIG. 9, a knowledge graph 902 of the engineering program 124 is shown. The remodeller module 112 is configured to mark a first portion 904 of the knowledge graph 902 as a relevant portion of the knowledge graph 902. The remodeller module 112 is further configured to mark a second portion 906 as having no immediate dependencies with the first portion 904. The remodeller module 112 is configured to prune the knowledge graph 902 by removing the second portion 906 to generate a pruned knowledge graph 908.

Referring back to FIG. 2, the remodeller module 112 further causes the processing unit 202 to analyze the generated second map and the generated third map. The processing unit 202 is further configured to map each node of the pruned knowledge graph with one or more logic blocks of the engineering program 124 based on the analysis. The remodeller module 112 further causes the processing unit 202 to determine two or more logic blocks associated with at least one node of the pruned knowledge graph based on the analysis. The remodeller module 112 further causes the processing unit 202 to concatenate the determined two or more logic blocks to generate the transformed engineering project. The remodeller module 112 further causes the processing unit 202 to generate a transformed engineering program based on an analysis of the pruned knowledge graph. In the transformed engineering program, a plurality of logic blocks of the engineering program 124 are rearranged into a plurality of template based logical blocks. Examples of the plurality of template based logical blocks comprises a condition based logic block, a boolean based logic block and an assignment based logic block. Each of the plurality of template based logical blocks comprises information associated with a specific type of logic block in the engineering program 124. Each of the plurality of template based logical blocks correspond to a specific template of the plurality of templates in the template based knowledge graph.

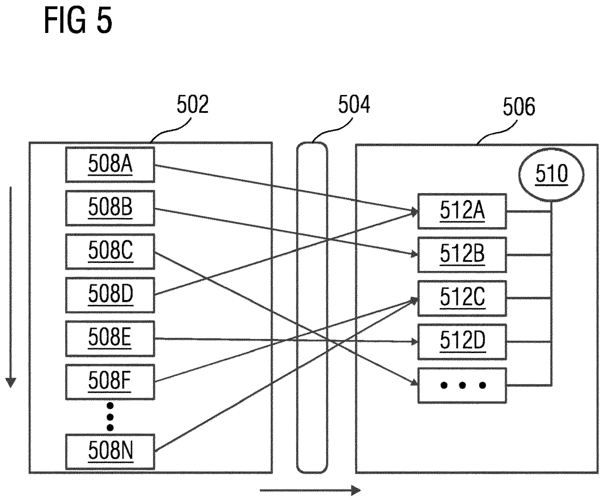

Referring to FIG. 5, a conversion of an engineering program 502 to a transformed engineering program 506 is shown. The engineering program 502 comprises a plurality of logic blocks 508A-N. The plurality of logic blocks 508A-N comprises a random set of logic blocks such as a first assignment block 508A and a second assignment block 508D, an arithmetic block 508B, a Boolean logic block 508C, a conditional statement block 508E, and a set of block calls 508F-N. The processing unit 202 is configured to convert the engineering program 502 to a knowledge graph 504. Furthermore, the knowedge graph 504 is compared with a template based knowledge graph to match the plurality of logic blocks 508A-N with a plurality of templates in the template based knowledge graph. The transformed engineering program 506 is generated such that the plurality of logic blocks 508A-N are rearranged into a plurality of template based logic blocks 512A-D. For example, in the transformed engineering program, the first assignment block 508A and the second assignment block 508D are rearranged into an assignment template based logic block 512A. The boolean logic block 508C is rearranged into a boolean template based logic block 512B. The artithmetic logic block 508B is rearranged into a arithmetic template based logic block 512C. The set of block calls 508F-N are rearranged into a block call template based logic block 512D.

Referring back to FIG. 2, the processing unit 202 is further configured to integrate the transformed engineering program into the training data set 106. Advantageously, the transformed engineering program is devoid of portions of the engineering program 124, which are irrelevant for training the artificial intelligence model 126. Thus, the transformed engineering program is indicative of a refined training data set for training the artificial intelligence model 126. Furthermore, manual labour and time required to refine the training data set 106 from the engineering program 124 is eradicated.

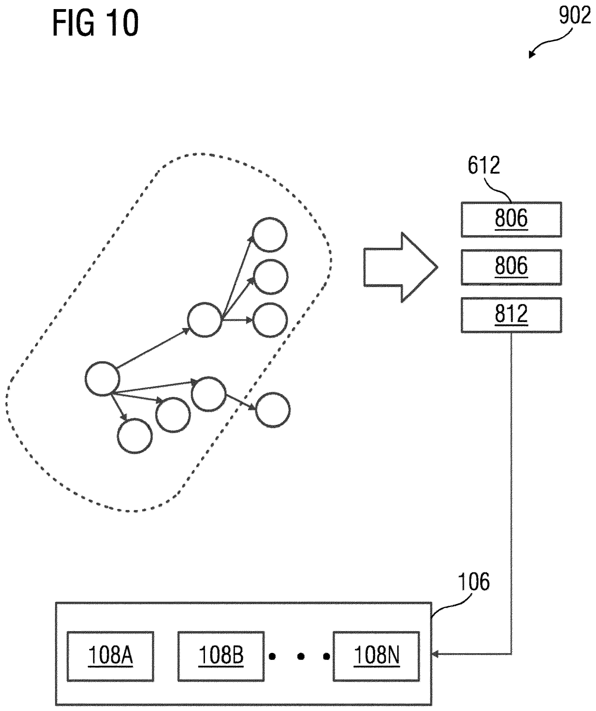

Referring to FIG. 10, a pruned knowledge graph 908 (as shown in FIG. 9) is configured to generate a transformed engineering program 612. The transformed engineering program 612 has one or more logic blocks 806, 808, and 812. The transformed engineering program 612 is integrated into the training data set 106.

The remodeller module 112 further causes the processing unit 202 to receive a plurality of template labels for each template of the plurality of templates of the template based knowledge graph. In one example, the plurality of template labels are received from a user via a human machine interface such as the one or more client devices 120A-N. The plurality of template labels comprises a name for each template of the plurality of templates in the template based knowledge graph. The name of each template indicates at least one of a function of the template, an industrial domain associated with the template, and a programming language associated with the template.

The remodeller module 112 further causes the processing unit 202 to receive information associated with a plurality of training requirements for the artificial intelligence model 126. In one example, information associated with the plurality of training requirements is received from the user via the human machine interface. The plurality of training requirements is a textual description of desired key performance indicators of the artificial intelligence model which is to be trained. In one example, the plurality of training requirements comprises a list of template labels.

The remodeller module 112 further causes the processing unit 202 to analyze the plurality of training requirements and the plurality of template labels by application of the natural language processing algorithm on the plurality of training requirements and the plurality of template labels. The processing unit 202 is further configured to compare the the plurality of training requirements and the plurality of template labels based on the analysis

The remodeller module 112 further causes the processing unit 202 to determine one or more templates labels of the plurality of template labels, which match with one or more of the plurality of training requirements based on the comparison. The processing unit 202 is further configured to map the determined one or more template labels with one or more templates of the plurality of templates of the template based knowledge graph. The remodeller module 112 further causes the processing unit 202 to determine the one or more templates of the plurality of templates which are mapped with the determined one or more template labels.

The remodeller module 112 further causes the processing unit 202 to determine one or more nodes of the template based knowledge graph which are indicative of the determined one or more templates. The remodeller module 112 further causes the processing unit 202 to determine one or more nodes of the pruned knowledge graph based on an analysis of the one or more nodes of the template based knowledge graph and the pruned knowledge graph. The determined one or more nodes of the pruned knowledge graph are similar to the one or more nodes of the template based knowledge graph. In one example, the one or more nodes of the pruned knowledge graph are determined by application of a similarity checking algorithm on the pruned knowledge graph and the one or more nodes of the template based knowledge graph.

The remodeller module 112 further causes the processing unit 202 to determine dependencies of the determined one or more nodes of the pruned knowledge graph with other nodes of the pruned knowledge graph based on an analysis of the pruned knowledge graph. The remodeller module 112 further causes the processing unit 202 to transform the pruned knowledge graph by removing other nodes of the pruned knowledge graph which lack immediate dependencies with the determined one or more nodes of the pruned knowledge graph. The processing unit is further configured to determine one or more logic blocks from the engineering project, which match with a plurality of nodes of the transformed knowledge graph. The one or more logic blocks are determined based on an analysis of the first map, the second map and the third map. The processing unit is further configured to generate the transformed engineering program based on the determined one or more logic blocks. The processing unit is further configured to integrate the transformed engineering program 124 into the training data set 106. Advantageously, the transformed engineering program only contains the one or more logic blocks which are determined based on the received plurality of training requirements. Thus, the transformed engineering program lacks logic blocks which are indicative of undesirable characteristics. Advantageously, the training data set 106 with desired characteristics is automatically generated from the received engineering program 124. In other words, the processing unit 202 is further configured to generate the training data set 106 to train the artificial intelligence model based on the transformed knowledge graph and the received plurality of training data requirements.

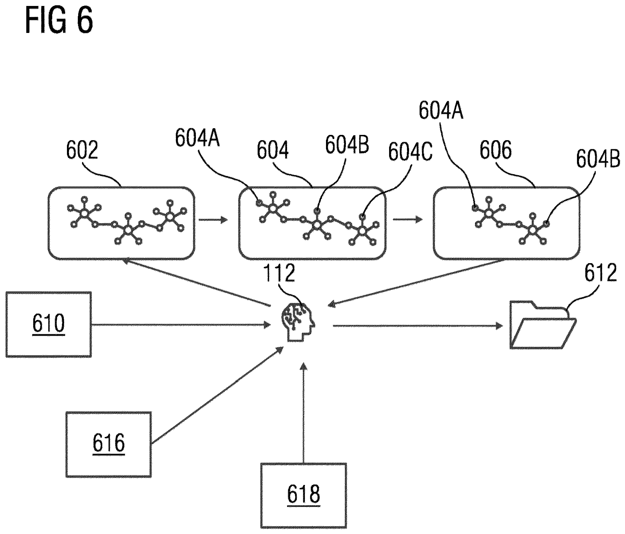

Referring to FIG. 6, the remodeller module 112 is configured to receive an engineering project 610, a plurality of training data requirements 616, and a template based knowedge graph 618. The remodeller module 112 is further configured to generate a knowledge graph 602. Further, the remodeller module 112 is further configured to prune the knowledge graph 602 to generate a pruned knowledge graph 604B based on a comparison with the template based knowedge graph 618. The remodeller module 112 is further configured to determine a relevant portion 604A of the pruned knowledge graph 604 based on an analysis of the plurality of training data requirements 616. The remodeller module 112 is further configured to detect a first portion 604B which has immediate dependency with the relevant portion 604A, and a second portion 604C which lacks an immediate dependency with the the relevant portion 604A. The remodeller module 112 is further configured to generate a transformed knowledge graph 606 by removing the second portion 604C from the knowledge graph 604. The remodeller module 112 is configured to generate a transformed engineering program 612 based on the transformed knowledge graph 606.

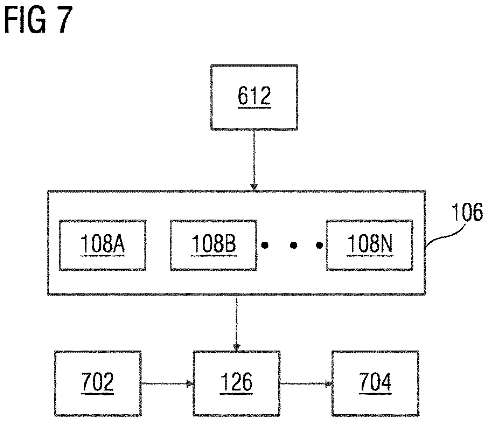

Referring to FIG. 7, the transformed engineering program 612 is integrated with the training data set 106, which is used to train the artificial intelligence model 126. The artificial intelligence model 126 is configured to transform an input 702 to an output 704.

Referring back to FIG. 2, the storage unit 206 may be a non-transitory storage medium configured for storing a database (such as database 118) which comprises server version of the plurality of programming blocks associated with the set of industrial domains.

The communication interface 208 is configured for establishing communication sessions between the one or more client devices 120A-N and the engineering system 102. The communication interface 208 allows the one or more engineering applications running on the client devices 120A-N to import/export engineering project files into the engineering system 102.

In an embodiment, the communication interface 208 interacts with the interface at the one or more client devices 120A-N for allowing the engineers to access the engineering programs associated with an engineering project file and perform one or more actions on the engineering programs stored in the engineering system 102.

The input-output unit 210 may include input devices a keypad, touch-sensitive display, camera (such as a camera receiving gesture-based inputs), etc. capable of receiving one or more input signals, such as user commands to process engineering project file. Also, the input-output unit 210 may be a display unit for displaying a graphical user interface which visualizes the behavior model associated with the modified engineering programs and also displays the status information associated with each set of actions performed on the graphical user interface. The set of actions may include execution of predefined tests, download, compile and deploy of graphical programs. The bus 214 acts as interconnect between the processor 202, the memory 204, and the input-output unit 210.

The network interface 212 may be configured to handle network connectivity, bandwidth and network traffic between the engineering system 102, client devices 120A-N and the technical installation.

Those of ordinary skilled in the art will appreciate that the hardware depicted in FIG 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognize that, for simplicity and clarity, the full structure and operation of all data processing systems suitable for use with the present disclosure is not being depicted or described herein. Instead, only so much of an engineering system 102 as is unique to the present disclosure or necessary for an understanding of the present disclosure is depicted and described. The remainder of the construction and operation of the engineering system 102 may conform to any of the various current implementation and practices known in the art.

FIG 3 is a block diagram of an remodeller module 112, such as those shown in FIG 2, in which an embodiment of the present invention can be implemented. In FIG 3, the remodeller module 112 comprises a request handler module 302, a knowledge graph generation module 304, an analysis module 306, a natural language processing module 308, an engineering program database 310, a validation module 312 and a deployment module 314. FIG. 3 is explained in conjunction with FIG. 1 and FIG. 2.

The request handler module 302 is configured for receiving the request to generate training data to train the artificial intelligence module 126. For example, the request is received from one of the one or more users external to the industrial environment 100 via the network 104. In alternative embodiment, the request is received from the one or the one or more client devices 120A-N via the network 104.

The knowledge graph generation module 304 is configured for generating the knowledge graph from the engineering program 124 and the template based knowledge graph from the plurality of engineering programs 108A-N. In a preferred embodiment, the generated knowledge graphs comprises information about relationships between a set of variables within the engineering program 124 and the plurality of engineering programs 108A-N.

The analysis module 306 is configured for analyzing the knowledge graph and the template based knowledge graph. The analysis module 306 is further configured to analyze the engineering program 124 and the plurality of engineering programs 108A-N.

The natural language processing module 308 is configured for apply the natural language processing algorithm on the engineering program 124 and the plurality of engineering programs 108A-N.

The engineering program database 310 is configured to store the plurality of engineering programs 108A-N and to generate the template based knowledge graph from the plurality of engineering programs 108A-N.

The validation module 312 is configured to validate the transformed engineering program based on a user defined set of criteria. The validation module 312 is further configured to train the artificial intelligence model 126 based on the validated engineering program.

The deployment module 314 is configured for integrating the transformed engineering program into the training data set 106.

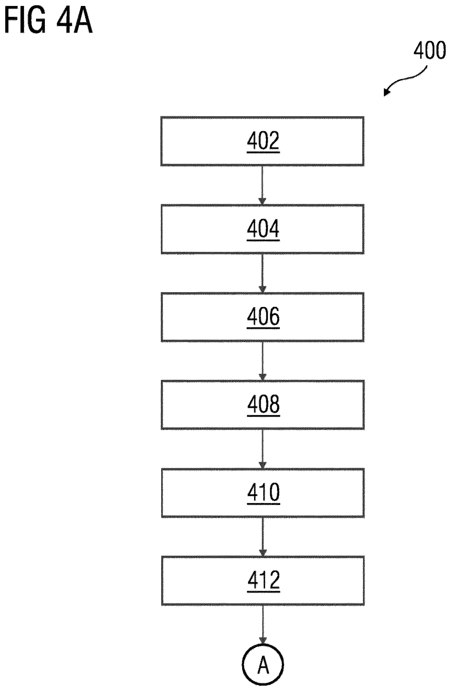

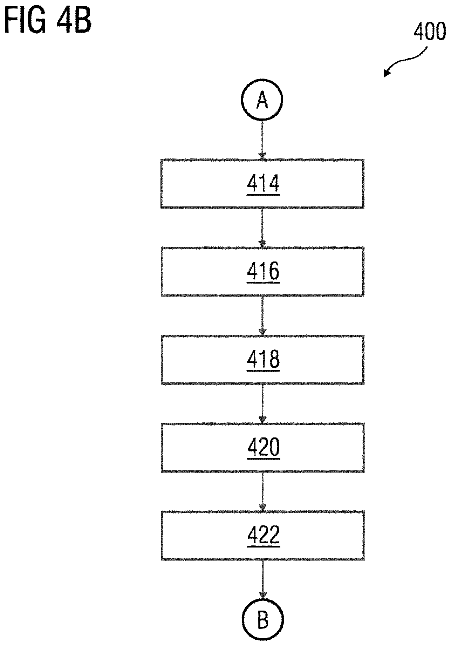

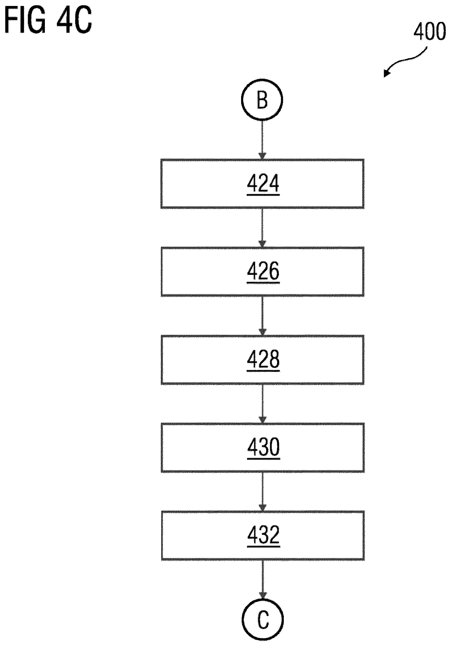

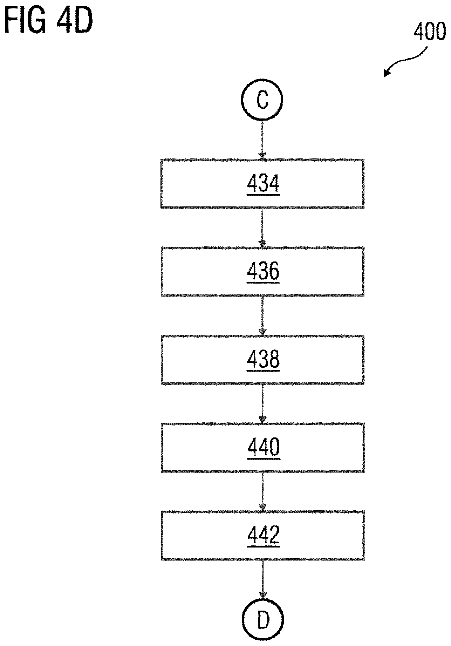

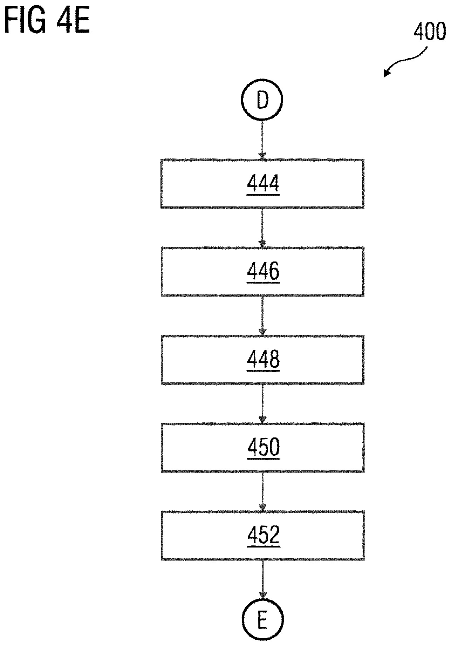

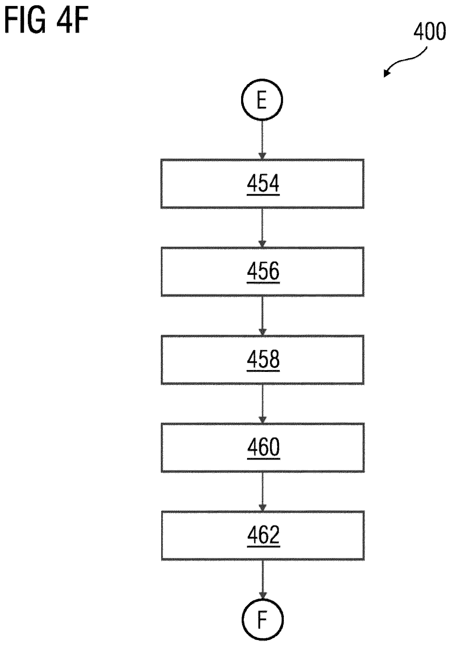

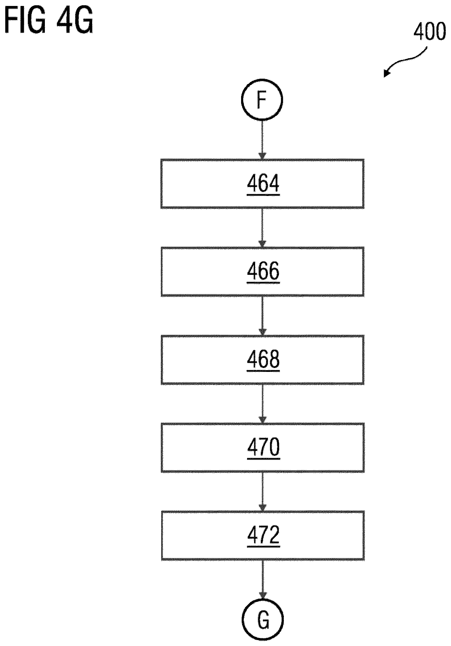

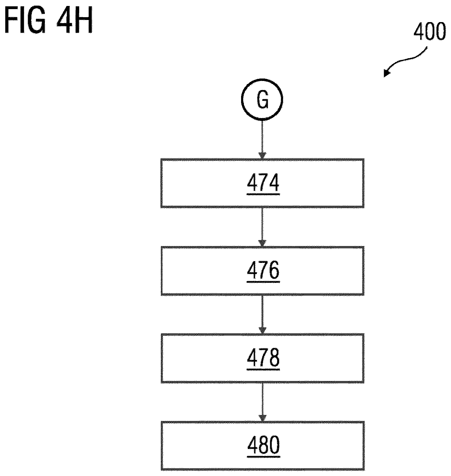

FIG 4A-H is a process flowchart illustrating an exemplary method 400 of automatically generating training data set for training an artificial intelligence model, according to an embodiment of the present invention. FIG 4A-E is described in conjunction with FIG 1, 2, and 3.

At step 402 the plurality of engineering programs 108A-N are received by the processing unit 202 from the database 118. The plurality of engineering programs 108A-N comprises sourcecode configured to control a plurality of engineering objects to implement a plurality of industrial processes in the technical installation.

At step 404, the plurality of engineering programs 108A-N are analyzed by the processing unit 202 by application of a natural language processing algorithm on the plurality of engineering programs 108A-N. Examples of the natural language processing algorithm include but is not limited to a Stanford Parser algorithm, a Spacy algorithm, a CoreNLP algorithm, an OpenNLP algorithm, a Gensim algorithm, a Hugging Face Transformers algorithm, and a Stanford Part-of-Speech Tagger (POS) algorithm.

At step 406, a plurality of tokens are generated by the processing unit 202 from the plurality of engineering programs 108A-N based on the analysis.

At step 408, each token of the plurality of tokens is compared by the processing unit 202 with each code snippet in the plurality of engineering programs 108A-N.

At step 410, a first map is generated by the processing unit 202 between each of the plurality of tokens and a plurality of code snippets of the plurality of engineering programs 108A-N based on the analysis.

At step 412, a plurality of dependencies is determined by the processing unit 202 between the plurality of tokens based on an analysis of the plurality of tokens. The plurality of dependencies include one or more data flow relationships, one or more control flow relationships, one or more inheritance relationships, and one or more dependency relationships between a plurality of program elements in the plurality of tokens of the plurality of engineering programs 108A-N.

At step 414, a plurality of logic blocks is generated by the processing unit 202 based on an analysis of the plurality of dependencies between the plurality of tokens. Each logic block of the plurality of logic blocks comprises at least one or more tokens, of the plurality of tokens, which are interrelated to each other.

At step 416, the plurality of logic blocks is analyzed by the processing unit 202 by application of a pattern recognition algorithm on the plurality of logic blocks.

At step 418, the plurality of logic blocks is clustered by the processing unit 202 into a plurality of clusters based on the analysis. In one example, the plurality of logic blocks are clustered by application of an unsupervised learning algorithm on the plurality of logic blocks.

At step 420, a plurality of templates is generated by the processing unit 202 for programming logic based on an analysis of one or more logic blocks in each cluster of the plurality of clusters. Each template of the plurality of templates is indicative of a specific type of programming logic.

At step 422, a plurality of nodes and a plurality of edges is generated by the processing unit 202 based on an analysis of the plurality of templates. Each node of the plurality of nodes comprises information associated with a specific template of the plurality of templates.

At step 424, the template based knowledge graph is generated by the processing unit 202 based on the generated plurality of nodes and the generated plurality of edges. To generate the template based knowledge graph, the processing unit 202 is configured to connect the plurality of nodes with the plurality of edges.

At step 426, the engineering program 124 is received by the processing unit 202 from a user. In one example, the processing unit 202 is configured to receive the engineering program 124 via a human machine interface such as a personal computer.

At step 428, the natural language processing algorithm is applied by the processing unit 202 on the engineering program. Examples of the natural language processing algorithm include but is not limited to a Stanford Parser algorithm, a Spacy algorithm, a CoreNLP algorithm, an OpenNLP algorithm, a Gensim algorithm, a Hugging Face Transformers algorithm, and a Stanford Part-of-Speech Tagger (POS) algorithm.

At step 430, a set of tokens are generated by the processing unit 202 from the engineering program based on the application of the natural language processing algorithm. Each token of the set of tokens comprises a specific code snippet of the engineering program.

At step 432, a second map is generated by the processing unit 202 between each of the set of tokens and a set of code snippets of the engineering program based on the analysis. In one example, the second map is generated based on the application of the natural language processing algorithm on the engineering program and further on the set of tokens.

At step 434, the set of tokens are analyzed by the processing unit 202 by application of the plurality of code processing algorithms on the set of tokens. The plurality of code processing algorithms comprises at least the parsing algorithm, the lexical analysis algorithm, and the semantic analysis algorithm.

At step 436, the plurality of dependencies between the set of tokens are determined by the processing unit 202 based on the analysis. The processing unit 202 is further configured to determine one or more tokens from the set of tokens, such that the one or more tokens have one or more dependencies between each other.

At step 438, a set of logic blocks is generated by the processing unit 202 based on an analysis of the plurality of dependencies between the set of tokens. Each logic block of the set of logic blocks comprises at least one or more tokens, of the set of tokens, which are interrelated to each other.

At step 440, a set of nodes and a set of edges is generated by the processing unit 202 based on an analysis of the set of logic blocks. Each node of the set of nodes comprises information associated with a specific logic block of the set of logic blocks.

At step 442, the knowledge graph is generated by the processing unit 202 based on the generated set of nodes and the generated set of edges. To generate the knowledge graph, the processing unit 202 is configured to connect the set of nodes with each other using one or more edges of the set of edges.

At step 444, a third map is generated by the processing unit 202 between each node of the set of nodes of the knowledge graph and the set of logic blocks of the engineering program 124 based on an analysis of the knowledge graph and the set of logic blocks.

At step 446, a knowledge graph is generated by the processing unit 202 based on an analysis of the received engineering program 124.

At step 448, one or more nodes of the knowledge graph is compared by the processing unit 202 with one or more nodes of the template based knowledge graph.

At step 450, the one or more nodes of the knowledge graph which is similar to the one or more nodes of the template based knowledge graphs is determined by the processing unit 202 based on the comparison.

At step 452, a first subgraph of the knowledge graph is compared by the processing unit 202 with a second subgraph of the template based knowledge graph.

At step 454, one or more subgraphs of the knowledge graph which is similar to one or more subgraphs of the template based knowledge graphs is determined by the processing unit 202 based on the comparison.

At step 456, a set of portions of the knowledge graph is determined by the processing unit 202 based on the determined one or more nodes and the determined one or more subgraphs of the knowledge graph.

At step 458, the set of portions of the knowledge graph which are similar to the one or more templates of the plurality of templates is determined by the processing unit 202 by application of a similarity checking algorithm on the knowledge graph and the template based knowledge graph.

At step 460, the generated knowledge graph and the template based knowledge graph comprising the plurality of templates by is compared the processing unit 202.

At step 462, the knowledge graph is analyzed by the processing unit 202 to determine one or more dependencies between the relevant portions of the knowledge graph and each node of the knowledge graph.

At step 464, a first node of the knowledge graph which lacks immediate dependencies with a plurality of nodes of the relevant portions of the knowledge graph is generated by the processing unit 202 based on the analysis.

At step 466, the generated second map and the generated third map are analyzed by the processing unit 202. The processing unit 202 is further configured to map each node of the pruned knowledge graph with one or more logic blocks of the engineering program 124 based on the analysis.

At step 468, the determined two or more logic blocks are concatenated by the processing unit 202 to generate the transformed engineering project.

At step 470, a transformed engineering program is generated by the processing unit 202 based on an analysis of the pruned knowledge graph. The processing unit 202 is further configured to integrate the transformed engineering program into the training data set 106.

At step 472, a plurality of template labels is received by the processing unit 202 for each template of the plurality of templates of the template based knowledge graph. In one example, the plurality of template labels are received from a user via a human machine interface such as the one or more client devices 120A-N.

At step 474, information associated with a plurality of training requirements for the artificial intelligence model 126 is received by the processing unit 202 from the user. In one example, information associated with the plurality of training requirements is received from the user via the human machine interface.

At step 476, a plurality of dependencies of the determined one or more nodes of the pruned knowledge graph with other nodes of the pruned knowledge graph are determined by the processing unit 202 based on an analysis of the pruned knowledge graph.

At step 478, he pruned knowledge graph is transformed by the processing unit 202 by removing other nodes of the pruned knowledge graph which lack immediate dependencies with the determined one or more nodes of the pruned knowledge graph. The processing unit is further configured to determine one or more logic blocks from the engineering project, which match with a plurality of nodes of the transformed knowledge graph.

At 480, the transformed engineering program is generated by the processing unit based on the determined one or more logic blocks. The processing unit is further configured to integrate the transformed engineering program 124 into the training data set 106.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralized or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Bezugszeichenliste

1. an industrial environment 100
2. training data set 106
3. an artificial intelligence model 126
4. the industrial environment 100
5. an engineering system 102
6. one or more client devices 120A-N
7. the network 104
8. The plurality of engineering programs 108A-N
9. a database 118
10. a user interface 122A-N
11. a platform 110
12. an remodeller module 112
13. a server 114
14. a network interface 116
15. an engineering program 124
16. a processing unit 202
17. an accessible memory 204
18. a storage unit 206
19. a communication interface 208
20. an input-output unit 210
21. a network interface 212
22. a bus 214
23. an integrated development environment (IDE) 216
24. a knowledge graph 902
25. a first portion 904
26. a second portion 906
27. a pruned knowledge graph 908
28. a transformed engineering program 506
29. The plurality of logic blocks 508A-N
30. a first assignment block 508A
31. a second assignment block 508D
32. an arithmetic block 508B
33. a Boolean logic block 508C
34. a conditional statement block 508E
35. a set of block calls 508F-N
36. a knowledge graph 504
37. the plurality of logic blocks 508A-N
38. plurality of template based logic blocks 512A-D
39. an engineering project 610
40. a plurality of training data requirements 616
41. a template based knowedge graph 618
42. a knowledge graph 602
43. a pruned knowledge graph 604B
44. a relevant portion 604A
45. a first portion 604B
46. a transformed engineering program 612
47. an input 702
48. an output 704
49. a request handler module 302
50. an analysis module 306
51. a natural language processing module 308
52. an engineering program database 310
53. a validation module 312
54. a deployment module 314

## Claims

1. A method (400) of generating training data for an Artificial intelligence model (126), the method comprising:
receiving, by a processing unit (202), an engineering program (124), wherein the engineering program (124) comprises a plurality of program elements;
generating, by the processing unit (202), a knowledge graph (804) based on an analysis of the received engineering program (124);
determining, by the processing unit (202), a set of portions (904) of the knowledge graph (804) which are similar to one or more templates of a plurality of templates, wherein the set of portions of the knowledge graph is determined based on a comparison of the knowledge graph with a template based knowledge graph (802) comprising the plurality of templates;
determining, by the processing unit (202), one or more portions (906) of the knowledge graph (902) which lack immediate dependencies with the determined set of portions of the knowledge graph (902) based on an analysis of the knowledge graph (804);
generating, by the processing unit (202), a pruned knowledge graph (908) by pruning the determined one or more portions (906) of the knowledge graph (902); and
generating, by the processing unit (202), a transformed engineering program (612) based on an analysis of the pruned knowledge graph (908), wherein the transformed engineering program (612) is integrated into a training data set (106) of the artificial intelligence model (126).

2. The method (200) according to claim 1, wherein the template based knowledge graph (802) is generated by:
receiving from a database (118), by the processing unit (202), a plurality of engineering programs (108AN) ;
analyzing, by the processing unit (202), the plurality of engineering programs (108A-N) by application of a natural language processing algorithm on the plurality of engineering programs (108A-N);
generating, by the processing unit (202), a plurality of tokens from the plurality of engineering programs (108A-N) based on the analysis, wherein each token of the plurality of tokens comprises a specific code snippet of the plurality of tokens; and
generating, by the processing unit (202), a first map between each of the plurality of tokens and a plurality of code snippets of the plurality of engineering programs (108A-N) based on the analysis.

3. The method (400) according to claim 1 and 2, wherein the template based knowledge graph (802) is generated further by:
analyzing, by the processing unit (202), the generated plurality of tokens and the generated first map;
determining, by the processing unit (202), a plurality of dependencies between the plurality of tokens based on the analysis; and
generating, by the processing unit (202), a plurality of logic blocks based on an analysis of the plurality of dependencies between the plurality of tokens, wherein each logic block of the plurality of logic blocks comprises at least one or more tokens, of the plurality of tokens, which are interrelated to each other .

4. The method (400) according to claim 1, 2 and 3, wherein the template based knowledge graph (802) is generated further by:
analyzing, by the processing unit (202), the plurality of logic blocks by application of a pattern recognition algorithm on the plurality of logic blocks;
clustering, by the processing unit (202), the plurality of logic blocks into a plurality of clusters based on the analysis;
generating, by the processing unit (202), a plurality of templates for programming logic based on an analysis of one or more logic blocks in each cluster of the plurality of clusters;
generating, by the processing unit (202), a plurality of nodes and a plurality of edges based on an analysis of the plurality of templates, wherein
each node of the plurality of nodes comprises information associated with a specific template of the plurality of templates, and
each edge of the plurality of edges comprises information associated with one or more dependencies between a first template and a second template in the plurality of templates; and
generating, by the processing unit (202), the template based knowledge graph (802) based on the generated plurality of nodes and the generated plurality of edges.

5. The method (400) according to any of claims 1 to 4, wherein generating the knowledge graph based on the analysis comprises:
applying, by the processing unit (202), the natural language processing algorithm on the engineering program (124);
generating, by the processing unit (202), a set of tokens from the engineering program (124) based on the application, wherein each token of the set of tokens comprises a specific code snippet of the engineering program (124); and
generating, by the processing unit (202), a second map between each of the set of tokens and a set of code snippets of the engineering program (124) based on the analysis.

6. The method (400) according to any of claims 1 to 5, wherein generating the knowledge graph (804) based on the analysis further comprises:
analyzing, by the processing unit (202), the set of tokens by application of a plurality of code processing algorithms on the set of tokens;
determining, by the processing unit (202), a plurality of dependencies between the set of tokens based on the analysis; and
generating, by the processing unit (202), a set of logic blocks based on an analysis of the plurality of dependencies between the set of tokens, wherein each logic block of the set of logic blocks comprises at least one or more tokens of the set of tokens, which are interrelated to each other.

7. The method (400) according to any of claims 1 to 6, wherein generation of the knowledge graph (804) based on the analysis further comprises:
generating, by the processing unit (202), a set of nodes and a set of edges based on an analysis of the set of logic blocks, wherein
each node of the set of nodes comprises information associated with a specific logic block of the set of logic blocks, and
each edge of the set of edges comprises information associated with one or more dependencies between a first logic block and a second logic block in the set of logic blocks;
generating, by the processing unit (202), the knowledge graph (804) based on the generated set of nodes and the generated set of edges; and
generating, by the processing unit (202), a third map between each node of the set of nodes of the knowledge graph and the set of logic blocks of the engineering program (124) based on an analysis of the knowledge graph (802) and the set of logic blocks.

8. The method according to any of claims 1 to 7, wherein determining the set of portions of the knowledge graph (802) associated with the plurality of templates comprises:
comparing, by the processing unit (202), one or more nodes of the knowledge graph (804) with one or more nodes of the template based knowledge graph (802);
determining, by the processing unit (202), the one or more nodes of the knowledge graph (804) which is similar to the one or more nodes of the template based knowledge graph (802) based on the comparison;
comparing, by the processing unit, a first subgraph of the knowledge graph (804) with a second subgraph of the template based knowledge graph (802);
determining, by the processing unit (202), one or more subgraphs of the knowledge graph (804) which is similar to one or more subgraphs of the template based knowledge graphs based on the comparison;
determining, by the processing unit (202), the set of portions (904) of the knowledge graph (804) based on the determined one or more nodes and the determined one or more subgraphs of the knowledge graph (804).

9. The method according to claim 8, wherein pruning the one or more portions of the knowledge graph (804) to generate the pruned knowledge graph (908) comprises:
determining, by the processing unit (202), a first node of the knowledge graph (804) which lacks immediate dependencies with the determined set of portions of the knowledge graph; and
determining, by the processing unit (202), a second node which is an orphan node in the knowledge graph (804);
removing, by the processing unit (202), the determined first node and the determined second node from the knowledge graph (804) to generate the pruned knowledge graph (908).

10. The method according to any of claims 3 to 9, wherein generating the transformed engineering program (612) based on an analysis of the pruned knowledge graph (908), comprises:
analyzing, by the processing unit (202), the generated second map and the generated third map;
determining, by the processing unit (202), two or more logic blocks associated with at least one node of the pruned knowledge graph (908) based on the analysis; and
concatenating, by the processing unit (202), the determined two or more logic blocks to generate the transformed engineering project (612).

11. The method according to any of claims 1 to 10, further comprises:
receiving, by the processing unit (202), a plurality of template labels for each template of the plurality of templates of the template based knowledge graph (804);
receiving, by the processing unit (202), information associated with a plurality of training requirements (616) associated with the artificial intelligence model (126);
analyzing, by the processing unit (202), the plurality of training requirements and the plurality of template labels by application of the natural language processing algorithm on the plurality of training requirements and the plurality of template labels;
determining, by the processing unit (202), one or more template labels of the plurality of template labels based on the analysis, wherein the one or more template labels match with the plurality of training data requirements (616); and
determining, by the processing unit (202), one or more templates of the plurality of templates which are associated with the determined one or more template labels.

12. The method according to any of claims 1 to 11, further comprises:
determining, by the processing unit (202), one or more nodes of the template based knowledge graph (804) which are indicative of the determined one or more templates;
determining, by the processing unit (202), one or more nodes (604A) of the pruned knowledge graph (908) based on an analysis of the one or more nodes of the template based knowledge graph (804) and the pruned knowledge graph (908), wherein the determined one or more nodes (604A) of the pruned knowledge graph (908) are similar to the one or more nodes of the template based knowledge graph;
transforming, by the processing unit (202), the pruned knowledge graph (604) by removing other nodes (604C) of the pruned knowledge graph (908) which lack immediate dependencies with the determined one or more nodes (604A) of the pruned knowledge graph; and
generating, by the processing unit, a training data set to train the artificial intelligence model based on the transformed knowledge graph (606) and the received plurality of training data requirements (616).

13. An engineering system for generating training data set (106) for an artificial intelligence model, wherein the engineering system comprises:
one or more processor(s) (202); and
a memory (204) coupled to the one or more processor(s), wherein the memory comprises a remodeller module (112) stored in the form of machine-readable instructions executable by the one or more processor(s), wherein the remodeller module (112) is capable of performing a method according to any of the claims 1-12.

14. A computer-program product, having machine-readable instructions stored therein, that when executed by a processing unit (202), cause the processors to perform a method according to any of the claims 1-12.
